(19) Europäisches Patentamt
European Patent Office
Office européen des brevets

(11) EP 2 729 895 B1

(12) **EUROPEAN PATENT SPECIFICATION**

(45) Date of publication and mention of the grant of the patent:
**06.07.2016 Bulletin 2016/27**

(21) Application number: **12811688.6**

(22) Date of filing: **09.07.2012**

(51) Int Cl.:
***G06F 21/00*** *(2013.01)* ***G06F 17/30*** *(2006.01)*
***G06F 21/51*** *(2013.01)* ***H04L 12/58*** *(2006.01)*
***G06Q 10/10*** *(2012.01)* ***H04L 29/06*** *(2006.01)*

(86) International application number:
**PCT/US2012/045979**

(87) International publication number:
**WO 2013/009713 (17.01.2013 Gazette 2013/03)**

(54) **SYNTACTICAL FINGERPRINTING**

SYNTAKTISCHER FINGERABDRUCK

EMPREINTE NUMÉRIQUE SYNTAXIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.07.2011 US 201161505630 P**

(43) Date of publication of application:
**14.05.2014 Bulletin 2014/20**

(73) Proprietor: **The UAB Research Foundation**
**Birmingham, AL 35294 (US)**

(72) Inventors:
- **WARDMAN, Brad**
  **Birmingham, AL 35205 (US)**
- **HADDOCK, Walker**
  **Hoover, AL 35226 (US)**

(74) Representative: **Gray, James et al**
**Withers & Rogers LLP**
**4 More London Riverside**
**London SE1 2AU (GB)**

(56) References cited:
**WO-A1-2007/096659** **KR-A- 20080 020 021**
**US-A1- 2007 094 500** **US-A1- 2009 292 925**
**US-B1- 7 958 555** **US-B1- 7 958 555**

- **DAVIDE CANALI ET AL: "Prophiler", WORLD WIDE WEB, ACM, 2 PENN PLAZA, SUITE 701 NEW YORK NY 10121-0701 USA, 28 March 2011 (2011-03-28), pages 197-206, XP058001392, DOI: 10.1145/1963405.1963436 ISBN: 978-1-4503-0632-4**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field of the Invention

The present invention is directed to a method of automatically identifying newly observed phishing websites within a toolbar, correctly branding the phishing websites for investigation, and determining the prevalence and provenance of the phishing websites.

### Background of the Disclosure

Researchers and developers have proposed a number of different techniques for detecting the similarity between files such as techniques that determine changes in source code for instance the ubiquitous Unix utility diff or to forensically identify variants of system files or malware through ssdeep. Such utilities provide the benefit of determining file changes such as edits to sections of code or minimal changes like the insertion or deletion of bytes. However, it is not always practical to need a nearly exact match, and these techniques provide no indication if files are of the same provenance. Phishing is an example case where files need not necessarily be exactly the same to identify if the website is malicious. Common components such as forms and JavaScript functions are developed and reused amongst this subset of cyber-criminals, and thus, can be used to identify new phishing websites as well as cluster similar websites.

Phishing is a social engineering attack where victims are lured into providing sensitive information, often times, through websites that mimic organizations, typically financial organizations. The collected information is then used to gain access to account information or used in identity theft. In 2008, Gartner Research reported that over 5 million Americans lost an average of $361 to phishing scams in 2008 which approximates to nearly $2 billion in losses. There are two approaches for dealing with these attacks: reactive and proactive.

The reactive approach is the case for many financial organizations in which malicious content is removed from the Internet in a process referred to as "takedown". Typically, organizations outsource this process to "takedown" companies. The companies receive potentially malicious URLs and determine if the URLs are phish. If the website is a phish, the system admin of the domain hosting the URL is then contacted and subsequently asked to remove the content. However, some organizations have begun a proactive approach of dissuading phishers from pursuing future attacks through prosecution and conviction.

Reactive organizational responses include blocking malicious content before it arrives to the potential victim via the email filters and browser toolbars. Email service providers, mailbox software such as Microsoft Outlook and Mozilla Thunderbird, or anti-span vendors use URL lists of known websites hosting malicious content ("blacklists"), features within the URL, and statistical techniques (DSPAM, SpamAssassin, etc) to obstruct phishing emails from reaching the potential victim. In response to spam filters, phishers hide content within the email message via HTML, spoof the sender's email and IP addresses, and create random URLs redirect the victims to the phishing website. These redirects can help to defeat blacklists as every URL can be randomly unique. Additionally, researchers have shown that it takes two hours for blacklists to identify an adequate percentage of URLs and that the spam campaigns for these URLs, which refers to the sending of a short, high volume distribution of email messages for a common intent, last on average four - six hours. Therefore, by the time it takes to blacklist the URL, the criminal has likely already moved on to spamming new URLs for the next phishing website.

Browser toolbars are another reactive measure often employing similar techniques to identify phishing websites. Toolbars use the combination of URL blacklists and heuristics on the content of the website to warn users of the phishing content (Mozilla Firefox 2011; Internet Explorer 2011; Netcraft 2011). These content-based techniques can use the text analysis of the website, WHOIS information, and image analysis for identification. This is one major weakness with these reactive approaches and is why some organizations have begun to employ a proactive approach too.

Some organizational responses have turned to more proactive approaches where investigators and law enforcement are used to deter phishers with consequences of prosecutions and jail time. On the other hand it has been documented that phishing investigations are difficult to investigate and convict. Investigators often lack the tools and analyzed data necessary to build strong evidence against the criminals. Researchers have attempted to collect aggregate information about phishing incidents to provide data reports about the prevalence of this crime. In 2007, phishers created domains and hosted these domains on the same IP blocks. In order to group websites created by the same phisher, a clustering algorithm was developed that determines the prevalence of phishing websites based on the IP address or network. Thus indicating the extent of which a phisher has based on where the websites are hosted. However, it has been documented recently that phishers are sharing common attack tools and could use the same exploits to compromise web servers; thus, if phishing websites are hosted on the same network it does not necessarily indicate the website was created by the same phisher.

In previous work, a clustering algorithm was developed that employs a file matching algorithm called Deep MD5 Matching to group sets of websites by the number of similar files in the file sets. This technique demonstrated the ability to cluster groups of websites created from the same or similar phishing kit. One drawback of this technique is the ability to cluster websites that consist of only one file hosted on the domain hosting the website WO 2007/096659 also discloses a method and system to detect and deal with phishing websites.

Research at the University of Alabama at Birmingham showed that around 50% of phishing websites contain only one file on the server of the hosted domain while the other files that provide the website look and feel exist on another server such as the targeted organization's, or brand's web server. In response, a new approach needed to be developed for such websites.

## Summary of Disclosure

The present invention is directed to a method of identifying newly observed phishing websites within a toolbar, correctly branding the phishing websites for investigation, and determining the prevalence and provenance of the phishing websites. Syntactical fingerprinting computes a similarity coefficient between sets of constructs or components of the main index files of phishing websites to determine similarity. The method can be used to identify, brand, and group similar websites that may provide evidence of the phish's authorship or origin.

In particular, the syntactical fingerprinting method is used to find file relationships and determine file similarity. It does so by parsing files and large sets of strings into segments and comparing those segments to other files or documents to determine their similarity. The ability of syntactical fingerprinting to identify phishing website relies in part on the practice of software developers reusing structural and functional components, such as functions and classes, in the development of their programs or websites. Similarly, people reuse posts and advice on forums.

In addition to determining relationships between phishing websites, syntactical fingerprinting can be applied to malware samples to determine malware families and versions of malware. Overlapping code segments or functions may indicate that a virus writer reused code from another source or that the sets of files are all from the same file family (*i.e.* were created from the same source) and modified as time passed or when the code was distributed to different developers. Members in forums often re-post advice to users or to pass along news from other forums. In the case of hackers and terrorists, forums and forum topics can be fingerprinted to determine the provenance, or the origin, of the post. Further, hackers create new tools or exploit kits for breaking into computers. These exploit kits often reuse exploits from previous kits. It may be possible to show exploit kit families and the evolution of these kits over time. Syntactical fingerprinting may also be applicable to analyzing Internet traffic whether through web logs or on live packet captures. The protocol allows for the traffic to be parsed into components, and these components can be compared to determine the similarity between traffic. A weighted or white-listed approach can be used to remove commonly seen components that have no effect on the similarity of traffic.

The import aspect of syntactical fingerprinting is its ability to show relationships between files that could lead to file provenance and family, especially when the file format follows a particular syntax tree or protocol. Additionally, syntactical fingerprinting can be used as a distance metric in clustering algorithms to demonstrate how file or protocol families have evolved over time.

## Brief Description of the Drawings

FIG. 1 is a flow chart illustrating a method for abstract syntax tree fingerprinting of phishing website.

FIG. 2 illustrates how two phishing websites targeting two different brands have overlapping HTML constructs such as the JavaScript functions.

FIG. 3 illustrates changes in code between two source code snippets.

FIG. 4 illustrates a ROC plot for syntactical fingerprinting with respect to the two training sets.

FIG. 5 illustrates a cluster using syntactical fingerprinting.

## Detailed Description of the Preferred Embodiments

The present invention is directed to a novel method called abstract syntax tree fingerprinting or syntactical fingerprinting for comparing similar phishing website file structural components, or constructs, to determine similarity. It is anticipated that this technique can be applied to computing the similarity between file types other than phishing website files. This similarity can be used to show that the phishing website files are of the same provenance and potentially be from the same file family. The method generally includes parsing a webpage such as a website index page into an abstract syntax tree. The source code constructs could consist of common elements of a webpage such as the forms, tables, and JavaScript code but are not limited to just those components. Every construct of the syntax tree is not parsed as some web pages may contain thousands of constructs potentially causing problems in comparisons and analysis.

Next, a hash value is computed for each construct, and the set of construct hash values is compared to other phishing web pages' sets of constructs. The final step uses a similarity coefficient (e.g. Kulczynski 2) to generate a similarity score. Depending on a predetermined threshold for the similarity score, the website is deemed phishing website associated with a particular brand such a Bank of America. Further based upon the similarity score, the provenance of the website can be determined.

Referring to FIG. 1, a system 10 is constructed to run on a computer system, such as a computer server, having a modern operating system like Microsoft Windows or a variant of UNIX such as Linux. Database functionality is currently provided by PostgreSQL, which is a powerful, open source object-relational database system, but could be used with other database platforms. PERL is currently used in the system to control communications through the Internet and to parse received e-mails. While the interpretive language PERL is currently used by the inventors, it is anticipated that a compiled language such as C would ultimately implement the features of the system.

Upon initiation 11, the system 10 receives 13 a string of supplied URLs 12 and parses them 13 into a text file having a separate URL on each line. The URLs 12 are provided by a variety of sources such as an anti-spam company, an anti-phishing company, a "shut-down" company, a beneficiary (e.g. a customer), forwarded e-mails from consumers, notifications from other entities that are active in preventing phishing website proliferation, or communications from an automated databases holding a collection of URLs maintained by anti-spam associations. Further, consumers might have an autonomous program running on their PCs that automatically captures communications from suspected phishing websites and sends those communications to the system 10 for automatic processing, or a consumer might manually invoke an installed plug-in that is designed to work with the consumer's e-mail program to forward a forensically clean copy of the suspected phishing communication. In addition, a pre-parsing program (not shown) can receive forwarded e-mails to the system and extract URLs present in an e-mail and feed those URLs to the system. The programming language PERL typically includes a parsing function in its function library that can be used to successfully parse e-mails to yield URLs present in the e-mail body.

Decision step 14 provides the exclusion of duplicate URLs and URLs that might have been reported by consumers as a potential phishing website, but which are legitimate sites identified beforehand by a beneficiary of the system 10. For example, if a particular domain is predefined as holding beneficiary sites, all URLs reported utilizing that domain name would be excluded from the system's analysis. Following removal of benign and duplicate URLs, the website content files 14 of the index pages for each of the remaining suspect phishing URLs is retrieved over the Internet and downloaded by system 10. System 10 then pre-processes 16 each of the website content files which includes removing all white space from the website content files and making the files case insensitive. Preprocessing further includes removing dynamic content or localizations that were added to the files during the unzipping of phishing kits on a website. Preprocessing yields normalized website content files.

Utilizing a program such as Beautiful Soup, a Python package that parses broken HTML, HTML tags within the normalized website content files, such as <form>, <script>, and <table> tags, are identified, and an abstract syntax tree 17 is created for each website. Other programming languages may also be used to parse the website files. Exemplary content files are illustrated at FIG. 2. The abstract syntax tree is constructed of the identified HTML entities which are arranged in the tree in same order as they are presented in the website content file from which it is derived.

Following parsing of the normalized website content files into abstract syntax trees, a hash value is calculated 18 for each of the identified HTML entities. Hash value sets are constructed from the hash values of each HTML entity of each website content file and stored in database. A hash value is obtained by calculating an MD5 checksum utilizing a known library function called "md5deep." Md5deep is a hashing function using MD5 (Message-Digest algorithm 5) that yields a single integer value uniquely representative of the downloaded index page. As is known, a hash function is any well-defined procedure or mathematical function which converts a large, possibly variable-sized amount of data into a small datum, usually a single integer, that may serve as an index into an array. In this case, the MD5 hash function is utilized to calculate a hash value for comparison with other stored hash values.

Once stored, a randomly selected hash value from the set of hash values of a website content file is compared 19 to the hash values of HTML entities of known phishing websites. Hash values are presented in a chronologically arranged hash value table and stored on a database 20. The hash values are arranged newest to oldest. During the comparison, the randomly selected hash value is compared to the known phishing website hash values in the order in which they are presented in the table. This way, the randomly selected hash value is compared to the recently added known phishing has values first followed by the older hash values. If no match is found in database 20 for the first randomly selected hash value, another hash value from the suspected website content files is carried out. If no match is found in the database 20 to reflect that the processed URL has no match, the URL can be escalated for manual review by an intervention team.

If a match is found in database 20, the hash value set for the suspected phishing URL is compared to the hash value set for the known phishing URL to which it was matched to create a similarity score 21. The Kulczynski 2 coefficient to generate a similarity score. The Kulczynski 2 coefficient is expressed in Equation 1 where *a* is the number of matching file construct MD5s or hash values between the sets 1 and 2, *b* is the number of constructs in set 1 that do not have MD5s matching a file construct in set 2, and *c* is the number of constructs in set 2 that do not have MD5s matching a file construct in set 1.

$$Kulczynski\ 2 = \frac{1}{2}\left(\frac{a}{a+b} + \frac{a}{a+c}\right) \quad Eq.\ 1$$

The value provided by evaluating Equation 1 measures the similarity between two file construct sets or hash value sets by taking the average of the proportion of matching constructs between the two sets. The Kulczynski 2 similarity coefficient is selected because the percentage of matching constructs in one set should have equal weight to the percentage of matching constructs in the other set, so as not to discriminate against the set of either webpage. Depending on a predetermined threshold for the similarity score, the suspected phishing URL is deemed a phishing website if it meets or exceeds the threshold. Once a website is deemed a phishing website, its hash value set is stored to the known phishing website hash value table on database 20. As described in further detail below, when a website is deemed a phishing website, its provenance is determined 23 by comparing the hash value set of the phishing website to the hash value sets of certain of the known phishing hash value sets stored on database 20 and calculating similarity scores.

The method of syntactical finger printing is described in further detail in the following Example.

**EXAMPLE**

Pre-processing of Constructs. Many phishing main index files include dynamic content (i.e. references to absolute file paths) that is added to the file during the unzipping of the phishing kits on the web server. This content causes mismatching against both simplistic and fuzzy hash value functions. Another attempt to diverge the phishing websites from the original copy includes edits to the cases of letters and the insertion or deletion of whitespace. Referring to FIG. 3, there is depicted an example of two Bank of America phishing website's source where a difference exists in "onKeyPress". To counter these examples, the constructs were preprocessed by removing URLs and whitespace and changing the constructs to case-insensitive before calculating the hash value. These pre-processing steps are effective on other forms of file matching algorithms as well.

Data Sets. This Example utilized two data sets collected and labeled by the UAB Computer Forensics Research Lab (CFRL). These data sets consisted of URLs from a number of different suspected phish URL feed sources making each data set a diverse, quality collection of phishing websites. URLs were sent to the UAB Phishing Data Mine where duplicate URLs were removed, to avoid reprocessing the same content. Website content files associated with the URLs were downloaded using custom software that employs GNU's Wget Red Hat modified.

The training data set was tested under two experiments: the first experiment updated the training set as if the UAB Phishing Operations team and the automated approach Deep MD5 Matching were labeling the URLs each day with a daily batch in which additional confirmed URLs were added at the end of each day (*i.e.*, mimicking a feed of confirmed URLs from blacklisting companies). This experiment most closely resembled the problems that a live phishing system encounters in its day to day operations. The second training data set experimental run emulated a system consisting of perfect labels that were continuously updated to the training data set. This experiment most closely resembled hypothetical data sets used in academic research.

Data Set 1-Detecting Phishing Websites. Data Set 1 was collected in order to label websites as phish or non-phish. The data set's 49,840 URLs were manually reviewed to determine if the URLs were benign or phish to ensure the accuracy of results. The results found that 17,992, of the 49,840 URLs were phish targeting 156 different organizations. Since this data set was manually reviewed with respect to whether the URL was a phish or non-phish and not with respect to brand, the URL brand labels may not have been accurate.

Data Set 2 - Clustering Phishing Websites. Data Set 2 was collected after Data Set 1 was collected. This data set had websites targeting 230 distinct brands and was more diverse with respect to brands compared to Data Set 1 because of the addition of URL feed sources to the UAB Phishing Data Mine. One limitation of this data set was that it was not manually reviewed for accuracy and contained mislabeled websites with respect to brand and phishing label.

Methodology. Syntactical fingerprinting uses the structural components of the main index files of phishing websites as a mechanism for identifying phish. In addition to phishing website detection, syntactical fingerprinting is used to demonstrate the ability to cluster phishing websites and potentially identify the website's provenance.

Detecting Phishing Websites. Experiments were setup to validate the proposed methodology as an acceptable means for detecting phishing websites. Data Set 1 was used to measure the detection and false positive rates of syntactical fingerprinting on training data used to mimic both a live phishing system using human confirmation and a flawlessly labeled data set such as those used in academic research. These experiments tested the effects of varying the threshold values of the similarity coefficients between sets of file component hash values.

Clustering Phishing Websites. The second phase of research used syntactical fingerprinting as a distance metric for clustering. This phase of the research was tested on the 47,534 websites, or website pool, from Data Set 2. Three experiments were tested on the website pool where the threshold values generated by the Kulczynski 2 coefficient were varied using 10%, 50%, and 85%. The variations in the thresholds was used to demonstrate how lower threshold values may cluster based on provenance, or source, while higher threshold values may clusters based on the phisher. The clustering algorithm's steps were as follows:

```
Input: URL data set (D) , threshold value (tValue)
Output: A set of clusters grouped by a similarity coefficient
for each URL Ui in D do
    if Ui is not in the set of clusters C then
  Cx = create_new_cluster_with_representative_URL (Ui) ;
  C.add (Cx)
  for each URL Uj not in the set of clusters C do
       score Sy = calculate_similarity (Ui, Uj ) ;
       if Sy >= tValue then
           add_to_cluster (Uj, Cx) ;
  end
end
```

Statistical Analysis of Thresholds. In order to set a threshold, the false positive rate must be determined. For example, a toolbar or takedown company may only be able to accept a less than 1% false positive rate while a corporation may accept a 5% false positive rate to protect their workers. Three threshold values were explored demonstrating that low values still provide manageable false positive rates for certain factions of the anti-phishing community. Additionally, there is a difference in false positive categories when considering utilization of such a technique. There are false positives with respect to the website being a phish or benign websites as well as being labeled a false positive with respect to being of the same target organization. The former would be used to measure the accuracy of toolbars and email filters, whereas, the latter may be used to measure the accuracy of a clustering algorithm.

Statistical Technique. The statistical technique used in this research was a systematic sampling of both the benign and phishing URLs from Data Set 2. Over this time period, there were 47,534 URLs that contained a section matching with another URL within the same time period, establishing nearly 96.5 million pairs. Because of these large numbers, systematic sampling was used to reduce the number of URL pairs that needed to be manually verified to determine a confidence in syntactical fingerprinting. The systematic sampling scheme ordered the population by the time when the URL was submitted to the UAB system. The sampling technique computed a random starting point in the first i elements of the set and selected every $i^{th}$ element from that starting point throughout the rest of the ordered population. The computation of i was the result of the total population (N) divided by the sampling size (SS).

This approach was selected as the data set is unordered with respect to brands and non-phish. The statistical equation for achieving a 99 percent confidence level with a sampling error rate of ± 2% states that with a population size of 1,000,000 one would need to sample 4,143 examples and when the population size is 100,000,000 than one would need to sample 4,160 (only thirteen more). Equations 2 and 3 were used to calculate the sample size needed for a population N. Z is defined as the Z score of the confidence percentage. P is the proportion of the population that is a phish. Typically if this value is not known, than use 0.5 which will maximize the portion of the population that needs sampled. Finally, C refers to the confidence interval meaning that the error rate is within ± some percentage. In this statistical analysis the confidence percentage is 99%, Z score is 2.576, P is 0.5, and C was set as both 1% and 2%.

$$X = \frac{Z^2 * P * (1 - P)}{C^2} \qquad \text{Eq. 2}$$

$$SS = \frac{X}{1 + \frac{X - 1}{N}} \qquad \text{Eq. 3}$$

The 99% confidence and P value of 0.5 were selected in order to oversample the number of websites needed to show the validity of syntactical fingerprinting.

Statistical Analysis. Preliminary testing showed that false positive and detection rates changed as the threshold values were varied. Therefore, three threshold values, 10%, 50%, and 85% were tested to determine the false positive rate that would incur when using them in the syntactical fingerprinting method. Populations were gathered from the 96.5 million pairs, consisting of both benign and phishing websites, where the computed Kulczynski 2 coefficient of file component sets were greater than equal to the three thresholds. The results of these queries produced a population of 10,548,665 pairs for a threshold value of 85, while 19,282,737 for 50% and 88,999,846 pairs for 10%. Table 1 presents the sample sizes computed using Equation 3 on the population for each threshold.

| Sampling Sizes | 85% threshold | 50% threshold | 10% threshold |
|---|---|---|---|
| ± 1% error rate | 16,615 | 16,627 | 16,638 |
| ± 2% error rate | 4,160 | 4,160 | 4,160 |

**Table 1: Sample sizes for each threshold in the statistical analysis of Syntactical Fingerprinting.**

In order to test the accuracy of the sampling methodology, as well as, to add statistical merit to the study, each set of samples, both the 1% and 2% sample, were randomly selected and the website were manually reviewed to determine the accuracy of the syntactical fingerprinting method. In all, 62,360 pairs were reviewed for accuracy. These samples showed the expected false positive rates with respect to brand labeling and phish detection on a perfectly labeled data set. Tables 2 and 3 consist of the results of the statistical analysis of each threshold using a 99% confidence level at both a ± 1% and ± 2% sampling error rates.

| False Positive Rates | 85% threshold | 50% threshold | 10% threshold |
|---|---|---|---|
| 99% Confidence with | 0.0% | 0.0% | 0.32% |

| | | | |
|---|---|---|---|
| ± 1% error rate | | | |
| 99% Confidence with ± 2% error rate | 0.0% | 0.0% | 0.07% |

**Table 2: Results of statistical approach on labeling benign websites as phish using Syntactical Fingerprinting.**

| False Positive Rates | 85% threshold | 50% threshold | 10% threshold |
|---|---|---|---|
| 99% Confidence with ± 1% error rate | 0.04% | 0.69% | 1.02% |
| 99% Confidence with ± 2% error rate | 0.07% | 0.07% | 0.77% |

**Table 3: Results of statistical approach on misbranding phish using Syntactical Fingerprinting.**

Results. First presented are the results of the detection and false positive rates that occurred over Data Set 1 when varying the threshold values of the Kulczynski 2 similarity coefficient between file component sets. Secondly, the results of the clustering method using syntactical fingerprinting as the distance metric are presented. 12 Analyst Notebook charts are presented to visually illustrate how file components are used throughout evolving phishing websites, whether by the same or different phisher.

Detecting Phishing Websites. Referring to FIG. 4, the statistical approach described above showed that varying threshold values can change the levels of false positives in identifying phishing content. The detection and false positive rates of each threshold were measured on Data Set 1. As observed in Table 4, varying threshold values for syntactical fingerprinting had an impact on both the detection and false positive rates. There was a substantial 6-7% increase in the detection rate when lowering the threshold from 85% to 10% in both experimental runs. The false positive rate for the 85% threshold was 1.9% and 2.0% respectively, whereas, the false positive rate for an 85% threshold increased 12.5 and 13.5% in the two experiments which is a high false positive rate for anti-phishing solutions. There were 1,981 websites (11%) in this data set whose main index page did not contain any AST constructs.

The labeling seemed to get better as the training data (*i.e.*, the number of phishing main pages) increased in size. Table 4 indicates that there were a lot of benign websites that contained some overlapping segments that were present in phish. Many of these benign websites barely overlapped, as indicated by their scores.

| Technique | Total Data Set | |
|---|---|---|
| | DR | FP |
| AST (85%) Training Set 1 | 88.1% | 1.9% |
| AST (50%) Training Set 1 | 93.0% | 3.8% |
| AST (10%) Training Set 1 | 95.1% | 14.4% |
| AST (85%) Training Set 2 | 89.5% | 2.0% |
| AST (50%) Training Set 2 | 93.4% | 3.6% |
| AST (10%) Training Set 2 | 95.4% | 15.5% |

**Table 4: The results of Syntactical Fingerprinting using the main index pages in the data set.**

Clustering Phishing Websites. The final results illustrated how the main page of phishing websites can be clustered using the constructs that compose these websites. The first set of clusters was grouped based on a 10% overlap between the websites in Data Set 2. The second and third are similar but using the 50% and 85% threshold values. The variations in the threshold values helped to illustrate how lower thresholds show the ability to identify websites of the same provenance or original components, whereas, higher thresholds demonstrate the ability to find a group of websites created by an individual phisher.

The first set of clusters used a 10% threshold, therefore, if 10% or more of the segments contained in a phishing page were present in the representative URL, then the candidate URL was joined to the cluster. Once the candidate URL was added to a cluster then it was removed from the representative and candidate URL pools. This process resulted in 4,033 clusters of which 2,182 clusters contained more than one URL in the cluster. There were 1,018 of the 2,182 clusters that contained at least one website with a brand in the cluster while 94 of these clusters contained multiple brands in the same cluster.

Increasing the selectivity of the clustering algorithm by raising the threshold resulted in more clusters of smaller size. At the 50% threshold there were 6,791 clusters including 2,182 with more than a single URL while the 85% threshold resulted in 9,311 clusters of which 2,948 contained more than a single URL. At the 50% level, 1,721 had at least on website with a labeled brand and only 87 clusters had multiple brands while at the 85% level, 2,796 clusters contained a branded website and 106 clusters contained multiple brands.

As noted above, the URLs in Data Set 2 represented 230 distinct phishing brands. Table 5 shows some characteristics of the ten most prominent brands with respect to the representative URL in the 85% and 10% threshold results. Table 5 illustrates how varying the threshold values for the Kulczynski 2 coefficient in syntactical fingerprinting can change the sizes and number of clusters. An important change in Table 5 is the reduction of PayPal phishing websites, 74.5% when moving the threshold from 85% to 10%. Observations what occurred, as well as, a deeper analysis of the resulting clusters is described below in the clustering discussion section.

| Target | 85% Threshold | | 10% Threshold | | Percent Difference | |
|---|---|---|---|---|---|---|
| | # of Clusters | # of Websites | # of Clusters | # of Websites | Clusters | Websites |
| PayPal | 595 | 4,322 | 186 | 1,104 | 68.7% | 74.5% |
| Bank of America | 174 | [illegible] | 24 | 1,619 | 86.2% | 1.0% |
| eBay | 95 | 965 | 36 | 556 | 62.1% | 42.4% |
| Chase Bank | 72 | 1,216 | 18 | 1,093 | 75.0% | 10.1% |
| HSBC | 69 | 1,746 | 23 | 773 | 66.7% | 55.8% |
| Visa | 56 | 227 | 26 | 276 | 53.6% | -21.6% |
| Lloyds TSB | 53 | 477 | 23 | 281 | 56.6% | 41.1% |
| Craigslist | 48 | 102 | 38 | 92 | 20.8% | 9.8% |
| Facebook | 38 | 50 | 6 | 27 | 84.2% | 46.0% |
| Bradesco | 35 | 263 | 11 | 341 | 68.6% | -30.0% |

**Table 5: The largest number of clusters with respect to target organizations based on the representative URLs brand using Syntactical Fingerprinting.**

The results of the experiments and how this technique can be tuned for different purposes is discussed hereafter. For a clearer representation of syntactical fingerprinting and how its works, an i2 Analyst Notebook chart of an example cluster is described.

FIG. 5 is a visual representation of one of the clusters created using syntactical fingerprinting at a 50% threshold. The brand for the representative URL, the circle in the center of the diagram, is NatWest. The squares, referred to as subsets, represent the common sets of constructs amongst each group of phish which are denoted by the phishing website icons. The arcs have an associated decimal number that is the similarity score(s) that the phishing websites in each subset have with the representative URL. There are 13 JavaScript and 2 form segments that were used to build the cluster. Table 6 displays the percentage of occurrences of all websites in the cluster where the entity existed within the source code.

| | |
|---|---|
| JavaScript entities 1, 2 ,3, 4 | 91% |
| JavaScript entities 5, 6, 7, 8 | 82% |
| JavaScript entity 9 | 64% |
| JavaScript entities 10, 11 | 46% |
| JavaScript entities 12, 13 | 18% |
| Form entities 1, 2 | 27% |

**Table 6: Illustrates the percentage of websites containing each entity.**

As illustrated by the elements in Table 6, matching JavaScript entities are more prevalent when compared to matching form entities. The form entities are often used to give the websites their look and feel, whereas, JavaScript entities can affect the functionality of the website. Individual versions of a phishing website may have slightly different looks and feel, but still require the same functionality. Hence, the prevalence of the matching JavaScript entities may be due to the websites functionality and not the look and feel.

Detecting Phishing Website. The detection and false positive rates of the syntactical fingerprinting experiments are comparable to previous researchers' results with the exception of the high false positive rates associated with the 10% threshold value. The utilization of two data sets showed surprising results. There was no significant difference between using the training data from the daily batch system to the approach using perfect labels for training. Analysis of false positives and negatives reduced the limitations of the technique the way it is currently implemented.

False negatives occurred within the data set because of two main reasons. The first reason for not identifying the phishing websites was because new source code was introduced during the data set that was not previously present within the data set or within the training set. The new source code was not a variation or modification to previously observed phishing websites. With a larger set of main index pages, as which currently exists in the UAB Phishing Data Mine, that the detection rate can be enhanced. The second reason for not classifying phishing websites was due to the syntactical parsing of the websites. In the current experiments, the syntactical elements were not being considered when the elements were capitalized such as searching for a <table> tab but not catching the <TABLE> tag. This occurrence was present in many of the missed websites. Another finding in this analysis is that some of the constructs were not being parsed and hashed in the syntax tree. For example, the current experiments did not consider the <div> tag as a construct for comparisons.

The false positive rate is a more complex to solve. There are instances where phishers are reusing constructs that are present in legitimate websites to give a realistic look and feel. These reusable components exist such as generic JavaScript functions used to login users and tables employed to select data. These common constructs may be given less weight in a future implementation so not to label phishing websites based on such constructs.

Clustering Phishing Websites. Using syntactical fingerprinting as a distance metric has shown the ability to group websites based on the common structural components that compose the main index page of the website. Analysis shows syntactical fingerprinting at varying thresholds may cause clustering based on phish versus nonphish, branding, or possibly the phisher.

Table 5 displays the resulting top clusters of syntactical fingerprinting clustering using the three threshold values. It is apparent that raising the threshold value of the Kulczynski 2 coefficient causes an increase in the number of clusters. Members in the same high threshold cluster may have been created by the same phisher.

An example of a higher thresholds generating more clusters is observed in Bank of America brand in Table 5. There is a 1% change in website membership between the 24 clusters generated using the 10% threshold and the 174 clusters generated using the 85% threshold. An explanation for the increase in the number of clusters and lack of difference in brand membership could be that the 174 clusters are groups of websites edited by different phishers, whereas, the 24 clusters are groups of websites from the same file origin.

Syntactical fingerprinting can be used to automatically brand websites. The 85% threshold generated 2,630 single brand clusters that account for 37,129 websites. However, the 85% threshold also generated 106 cross brand clusters that accounts for 18,457 websites. Analysis of the 106 cross branded clusters shows that 88 clusters are, in fact, not cross-branded clusters. Websites that are members of the 88 clusters were mislabeled through the manual and automated labeling currently employed by the UAB Phishing Date Mine. Furthermore, these clusters could be used to re-label the misidentified phishing content. As noted about Data Set 2, the data set is not 100% labeled by manual review. By using the clustering methodology, mislabeled phishing websites can be recognized and fixed within the data mine. In addition to re-labeling known phishing content, syntactical fingerprinting also showed the ability for updating past missed phishing websites. Once a new version of a phishing website is detected, past websites that were not detected can now be updated based on the new pattern or constructs.

Of the remaining 18 cross-branded clusters at the 85% threshold, 9 of the clusters contained websites that redirect, using JavaScript functions, users to additional content. The remaining 9 cross-branded clusters contained two brands per cluster. In all of these clusters, the websites of the two brands used the same constructs to organize and execute the phishing content. Many of the websites' source code were nearly identical except for the title and logo of the webpage.

An example can be observed in the following index page content files:

A. Santander Website

```
<!DOCTYPE HTML PUBLIC "-//W3C//DTD HTML 4.01 Transitional//EN">
 <html>
          <head>
 <title>Santander - Mais seguranga e praticidade no seu dia-a-dia</title>
 <meta http-equiv="Content-Type" content="text/html; charset=iso-8859-1">
 <script language="JavaScript" type="text/JavaScript">
 <!--
 function MM_reloadPage(init) { //reloads the window if Nav4 resized
  if (init==true) with (navigator) {if
 ((appName=="Netscape")&&(parseInt(appVersion)==4)) {
   document.MM_pgW=innerWidth; document.MM_pgH=innerHeight;
 onresize=MM_reloadPage; }}
  else if (innerWidth!=document.MM_pgW II innerHeight!=document.MM_pgH)
 location.reload();
 }
 MM_reloadPage(true);
 //-->
 </script>
 </head>
 <body leftmargin="0" topmargin="0" marginwidth="0" marginheight="0" scroll=no>
 <div id="Layer14" style="position:absolute; left:502px; top:27px; width:306px;
 height:16px; z-index:19"><font color="#FF0000" size="1" face="Verdana, Arial,
 Helvetica, sans-serif">Ambiente
   Seguro e Critptografado</font></div>
 <div id="Layer11" style="position:absolute; left:477px; top:22px; width:22px;
 height: 18px; z-index:18"><img
 src="http://www.colorsfm.com/grupo/imagens/cadiado.png" width="20"
 height= "23 "></div>
 <div id="Layer11" style="position:absolute; left:295px; top:185px; width:22px;
 height:18px; z-index:18"><img
 src="http://www.colorsfm.com/grupo/imagens/carlin.jpg" width="25"
 height="30"></div>
 <div id="Layer11" style="position:absolute; left:295px; top:255px; width:22px;
 height:18px: z-index:18"><img
 src="http://www.colorsfm.com/grupo/imagens/carlin.jp2" width="25"
 height="30"></div>
 <div id="Layer1" style="position:absolute; left:9px; top:17px; width:181px;
 height:64px; z-index:1"><img
 src="http://www.colorsfm.com/grupo/imagens/hello.png" width="178"
 height="50"></div>
 <div id="Layer2" style="position:absolute; left:5px; top:277px; width:109px;
 height:122px; z-index:2"><img
 src="http://www.colorsfm.com/grupo/imagens/pc.png" width="200"
 height="150"></div>
 <div id="Layer3" style="position:absolute; left:237px; top:43px; width:463px;
```

```
height:44px; z-index:3; background-image: url(../imagens/barra.png); layer-
background-image: url(../imagens/barra.png); border: 1px none #000000;"></div>
<div id="Layer4" style="position:absolute; left:233px; top:11px; width:65px;
height:19px; z-index:4"><strong><font color="#FF0000" size="2" face="Geneva,
Arial, Helvetica, sans-serif">Passo
 1</font></strong></div>
<div id="Layer5" style="position:absolute; left:258px; top:46px; width:28px;
height:27px; z-index:5"><img
src="http://www.colorsfm.com/grupo/imagens/botaovermelho1.png" width="30"
height="40"></div>
<div id="Layer6" style="position:absolute; left:291px; top:56px; width:26px;
height:24px; z-index:10"><img
src="http://www.colorsfm.com/grupo/imagens/botaocinza2.png" width="25"
height="24"></div>
<div id="Layer7" style="position:absolute; left:322px; top:56px; width:26px;
height:23px; z-index:9"><img
src="http://www.colorsfm.com/grupo/imagens/botaocinza3.png" width="25"
height="24"></div>
<div id="Layer8" style="position:absolute; left:352px; top:56px; width:26px;
height:23px; z-index:8"><img
src="http://www.colorsfm.com/grupo/imagens/botaocinza4.png" width="25"
height="24"></div>
<div id="Layer9" style="position:absolute; left:384px; top:55px; width:26px;
height:26px; z-index:11"><img
src="http://www.colorsfm.com/grupo/imagens/botaocinza5.png" width="25"
height="24"></div>
<div id="Layer10" style="position:absolute; left:7px; top:104px; width:348px;
height:25px; z-index:12"><strong><font color="#CC0000" size="4" face="Verdana,
Arial, Helvetica, sans-serif">Selecione
 o tipo de sua Conta.</font></strong></div>
<div id="Layer13" style="position:absolute; left:276px; top:180px; width:330px;
height:39px; z-index:15"><a
href="http://www.colorsfm.com/grupo/bancos/fisico/2.php"><img
src="http://www.colorsfm.com/grupo/imagens/botao-pessoaprime.png"
width="342" height="35" border="0"></a></div>
<div id="Layer14" style="position:absolute; left:276px; top:250px; width:326px;
height:33px; z-index:16"><a
href="http://www.colorsfm.com/grupo/bancos/prime/2.php"><img
src="http://www.colorsfm.com/grupo/imagens/botao-pessoaprivate.png" width="342"
height="35" border="0"></a></div>
<div id="Layer16" style="position:absolute; left:492px; top:51px; width:191px;
height:34px; z-index:17">
 <object classid="clsid:D27CDB6E-AE6D-11cf-96B8-444553540000"
codebase="http://download.macromedia.com/pub/shockwave/cabs/flash/swflash.cab#
version=6,0,29,0" width="195" height="25">
  <param name="movie" value="relogio_PF.swf">
  <param name="quality" value="high">
  <param name="wmode" value="transparent">
  <embed src="http://www.colorsfm.com/grupo/perfil/relogio_PF.swf" width="195"
height="25" quality="high"
pluginspage="http://www.macromedia.com/go/getflashplayer" type="application/x-
shockwave-flash" wmode="transparent"></embed>
 </object>
</div>
<script
src="http://www.colorsfm.com/grupo/perfil/dynActiveX_FineGround_vmzl5n2uiyse
odqrpoaauzllb_FGN_V01.js" type="text/javascript"></script>
<table width="745" height="473" align="left">
 <tr align="center" valign="top">
  <td width="66%" colspan="2"
background="http://www.colorsfm.com/grupo/imagens/layout.png"><p
align="left"><font size="2" face="Geneva, Arial, Helvetica, sans-serif"></font></p>
  <p align="left"> </p>
```

```
  <div align="left"><strong></strong> </div></td>
 </tr>
</table>
<div align="left"></div>
</body>
<script>
alert("Segurança e tranquilidade - Voce está operando em um ambiente seguro e
criptografado, a partir de agora.");
</script>
</html>
<?
}
?>
```

*B. Bradesco Website*

```
<!DOCTYPE HTML PUBLIC "-//W3C//DTD HTML 4.01 Transitional//EN">
<html>
          <head>
<title>Bradesco - Mais segurançqa e praticidade no seu dia-a-dia</title>
<meta http-equiv="Content-Type" content="text/html; charset=iso-8859-1">
<script language="JavaScript" type="text/JavaScript">
<!--
function MM_reloadPage(init) { //reloads the window if Nav4 resized
 if (init==true) with (navigator) {if
((appName=="Netscape")&&(parseInt(appVersion)==4)) {
  document.MM_pgW=innerWidth; document.MM_pgH=innerHeight;
onresize=MM_reloadPage; }}
 else if (innerWidth!=document.MM_pgW II innerHeight!=document.MM_pgH)
location.reload();
}
MM_reloadPage(true);
//-->
</script>
</head>
<body leftmargin="0" topmargin="0" marginwidth="0" marginheight="0" scroll=no>
<div id="Layer14" style="position:absolute; left:502px; top:27px; width:306px;
height:16px; z-index:19"><font color="#FF0000" size="1" face="Verdana, Arial,
Helvetica, sans-serif">Ambiente
  Seguro e Critptografado</font></div>
<div id="Layer11" style="position:absolute; left:477px; top:22px; width:22px;
height:18px; z-index:18"><img
src="http://sprinters.ru/2011atual/imagens/cadiado.png" width="20"
height="23"></div>
<div id="Layer1" style="position:absolute; left:9px; top:17px; width:181px;
height:64px; z-index: 1"><img src="http://sprinters.ru/2011atual/imagens/hello.png"
width="178" height="50"></div>
<div id="Layer2" style="position:absolute; left:5px; top:277px; width:109px;
height: 122px; z-index:2"><img src="http://sprinters.ru/2011atual/imagens/pc.png"
width="144" height="194"></div>
<div id="Layer3" style="position:absolute; left:237px; top:43px; width:463px;
height:44px; z-index:3; background-image: url(../imagens/barra.png); layer-
background-image: url(../imagens/barra.png); border: 1px none #000000;"></div>
<div id="Layer4" style="position:absolute; left:233px; top:11px; width:65px;
height:19px; z-index:4"><strong><font color="#FF0000" size="2" face="Geneva,
Arial, Helvetica, sans-serif">Passo
  1</font></strong></div>
<div id="Layer5" style="position:absolute; left:258px; top:46px; width:28px;
height:27px; z-index:5"><img
src="http://sprinters.ru/2011atual/imagens/botaovermelho1.png" width="30"
```

```
height="40"></div>
<div id="Layer6" style="position:absolute; left:291px; top:56px; width:26px;
height:24px; z-index:10"><img
src="http://sprinters.ru/2011atual/imagens/botaocinza2.png" width="25"
height="24"></div>
<div id="Layer7" style="position:absolute; left:322px; top:56px; width:26px;
height:23px; z-index:9"><img
src="http://sprinters.ru/2011atual/imagens/botaocinza3.png" width="25"
height="24"></div>
<div id="Layer8" style="position:absolute; left:352px; top:56px; width:26px;
height:23px; z-index:8"><img
src="http://sprinters.ru/2011atual/imagens/botaocinza4.png" width="25"
height="24"></div>
<div id="Layer9" style="position:absolute; left:384px; top:55px; width:26px;
height:26px; z-index:11"><img
src="http://sprinters.ru/2011atual/imagens/botaocinza5.png" width="25"
height="24"></div>
<div id="Layer10" style="position:absolute; left:7px; top:104px; width:348px;
height:25px; z-index:12"><strong><font color="#CC0000" size="4" face="Verdana,
Arial, Helvetica, sans-serif">Selecione
 o tipo de sua Conta.</font></strong></div>
<div id="Layer11" style="position:absolute; left:276px; top:172px:
width:326px; height:38px; z-index:13"><a
href="http://sprinters.ru/2011atual/bancos/fisico/2.php"><img
src="http://sprinters.ru/2011atual/imagens/botao-pessoafisica.png"
width="342" height="35" border="0"></a></div>
<div id="Layer13" style="position:absolute; left:276px; top:225px; width:330px;
height:39px; z-index:15"><a
href="http://sprinters.ru/2011atual/bancos/prime/2.php"><img
src="http://sprinters.ru/2011atual/imagens/botao-pessoaprime.png" width="342"
height="35" border="0"></a></div>
<div id="Layer14" style="position:absolute; left:276px; top:279px; width:326px;
height:33px; z-index:16"><a
href="http://sprinters.ru/2011atual/bancos/private/2.php"><img
src="http://sprinters.ru/2011atual/imagens/botao-pessoaprivate.png" width="342"
height="35" border="0"></a></div>
<div id="Layer16" style="position:absolute; left:492px; top:51px; width:191px;
height:34px; z-index:17">
 <object classid="c1sid:D27CDB6E-AE6D-11cf-96B8-444553540000"
codebase="http://download.macromedia.com/pub/shockwave/cabs/flash/swflash.cab#
version=6,0,29,0" width="195" height="25">
  <param name="movie" value="relogio_PF.swf">
  <param name="quality" value="high">
  <param name="wmode" value="transparent">
  <embed src="http://sprinters.ru/2011atual/perfil/relogio_PF.swf" width="195"
height="25" quality="high"
pluginspage="http://www.macromedia.com/go/getflashplayer" type="application/x-
shockwave-flash" wmode="transparent"></embed>
 </object>
</div>
<script
src="http://sprinters.ru/2011atual/perfil/dynActiveX_FineGround_vmz15n2uiyseodqr
poaauzllb_FGN_V01.js" type="text/javascript"></script>
<table width="745" height="473" align="left">
 <tr align="center" valign="top">
  <td width="66%" colspan="2"
background="http://sprinters.ru/2011atual/imagens/layout.png"><p
align="left"><font size="2" face="Geneva, Arial, Helvetica, sans-serif"></font></p>
  <p align="left"> </p>
  <div align="left"><strong></strong> </div></td>
 </tr>
</table>
<div align="left"></div>
```

```
</body>
<script>
alert("Segurança e tranquilidade - Voce está operando em um ambiente seguro e
criptografado, a partir de agora.");
</script>
</html>
<?
}
?>
```

In this example, the title, displayed in bold type, contains a different targeted brand but the rest of the title is the same. Each website refers to nearly all the same content files, however the files are hosted on different servers as indicated in type displayed in italics and noted above when preprocessing of the files occur. Finally, the Santander phish refers to a carlin.jpg that is not referenced to by the Bradesco phish where as the Bradesco phish refers to a botoapessoafisica.png. The carlin.jpg lines are underlined and the botoapessoafisica.png are displayed in underlined bold type. This may indicate that this technique may not be used to just identify a particular phishers's attack against one organization but that the phisher attacks multiple organizations using the same or similar content.

Finally, the result of varying thresholds is observed in the significant reduction of the websites in clusters whose representative URLs were labeled as PayPal as illustrated in Table 5. Comparing the 85% to 10% thresholds shows the number of websites decreases 74.5%. In more detail, there were 7,690 PayPal phish at the 10% threshold found in clusters whose representative URL labeled as benign, while 4,566 PayPal phish at the 85% threshold were found in similar clusters. This indicates one of two scenarios. First, it reiterates that the clustering method can be used to label the URLs not labeled as phish. On the other hand, it indicates that the representative URL for each cluster should be manually verified and labeled to augment brand labeling.

Syntactical fingerprinting using varying thresholds can be used by different phishing countermeasures. URL blacklisting companies may find the false positive rates at a 10% or 50% threshold acceptable; however, for takedown companies they are too high. On the other hand, the takedown companies do find the false positive rate at 85% to be acceptable. These companies typically employ human efforts to determine if a website is a phish. With this in mind, a system may be setup to label all websites that are above 85% to be phish while tagging websites fall between 85% and 50% as more likely candidates. Thus, reducing the amount of human effort required to review all potential phishing content.

Limitations. The methods described herein have limitations that, if addressed, may lead to better performance of syntactical fingerprinting. The first major limitation is the fetching process used to collect the phishing websites. Wget was used because of the ease of implementation and the features it provides. However, Wget also has limitations with respect to fetching content when redirects occur within the HTML, PHP, or JavaScript. Such redirects cause Wget to not retrieve the malicious phishing content. Many of the phishing websites that were not detected in Data Set 1 were in fact redirects and the phishing content was not retrieved. Had the website been retrieved, the detection rate of syntactical fingerprinting would have likely increased. One solution would be to develop a custom web crawler that has the ability to follow such redirects and capture the phishing content.

Another issue is the timing difference between the Wget fetch and the manual review process. If the web page has changed or its availability has changed in the time between the Wget fetch and the manual review process then the person manually reviewing the webpage will not see same webpage the Wget process retrieved. For example, if a phishing web page is suspended when Wget fetches it, but is active when the manual review process is conducted, then the manual review would label the suspended page in the UAB Phishing Data Mine as a confirmed phish. The resulting mislabel can cascade through the system causing many future mislabels. Finally, the clusters created by syntactical fingerprinting were only given a cursory analysis and not analyzed-in-depth. These clusters require more analysis to understand how they are composed and how the variations of thresholds can be used to identify different website tiers (*i.e.*, files of the same provenance, file family, brand, or phisher).

Future Work. The method described herein presents a novel means for detecting and classifying phishing websites. The initial results indicate that the method has good performance for detection and demonstrates the ability to link similar websites. There is room for improvement in both of these areas, and therefore, future work is necessary to make this technique even better. Incorporating the size and/or construct type as weighted adjustments in the similarity coefficient and using more elements of the abstract syntax tree as constructs may show improvement in the detection, branding, and authorship or provenance.

In the detection phase, this technique can be combined with other file matching methods for better performance with respect to increase in detection while a decrease in false positives. Syntactical fingerprinting may prove to be a good technique for finding candidate files to compare other file matching techniques against. This research has also shown the ability for syntactical fingerprinting to be used as a distance metric for simple clustering; however, future research could implement a variety of clustering algorithms to increase performance.

Future work could include investigation into high threshold clusters, as well as, show when the various file constructs emerged in the data collected by the UAB Phishing Data Mine. Syntactical fingerprinting may be able to show a correlation between the emergence of file constructs to changes in targeted organization's websites. Finally, further testing and analysis is required before more claims about the origins of a phishing main index file can be made.

As will be understood by those familiar with the art, the present invention may be embodied in other specific forms without departing from the essential characteristics thereof. Accordingly, the disclosures and descriptions herein are intended to be illustrative, but not limiting, of the scope of the invention which is set forth in the following claims.

## Claims

**1.** A method for identifying a phishing website comprising:

a. providing a computer system having an operating system, a database system and a communication system for controlling communications through the Internet,
b. transmitting a communication containing a plurality of suspected phishing urls to the computer system,
c. retrieving website content files for each suspected phishing url of the plurality of phishing urls, the website content files including structural components,
d. preprocessing the website content files thereby producing normalized website content file sets for each of the plurality of suspected phishing urls,
e. creating an abstract syntax tree for each of the normalized website content file sets,
f. calculating a hash value for each structural component of each of the normalized website content file sets and constructing a hash value set there from for each normalized website content file set,
g. selecting a first hash value from a first hash value set and comparing the first hash value to hash values of structural components of known phishing websites to locate a matching hash value,
h. if a matching hash value is located, comparing the first hash value set to a hash value set of the matching hash value and creating a similarity score, and
i. if the similarity score meets or exceeds a predetermined threshold, designating a suspected url from which the first hash value was derived as a phishing website.

**2.** The method according to claim 1 wherein the communication is transmitted from an anti-spam company, an anti-phishing company, a shut-down company, an autonomous program running on a consumer's computer system that is configured for automatically capturing suspected phishing site communications and sending the suspected phishing site communications to the computer system.

**3.** The method according to claim 1 wherein, when the plurality of suspected fishing urls are transmitted in a body of an e-mail, extracting the plurality of suspected phishing urls from the communication utilizing a first parsing program.

**4.** The method according to claim 1 further comprising prior to step c. removing from the plurality of suspected phishing urls any suspected phishing urls that are known benign urls, known phishing urls, or urls that are duplicates of another suspected phishing url in the plurality of suspected phishing urls.

**5.** The method according to claim 1 further comprising storing the website content files on the computer system.

**6.** The method according to claim 1 wherein preprocessing includes one or more of removing white space from the website content files, making the website content files case insensitive or removing dynamic content from the website content files.

**7.** The method according to claim 1 wherein the website content files are derived from index pages of the retrieved website content files.

**8.** The method according to claim 1 wherein creating the abstract syntax tree includes parsing HTML tags within the normalized website content file sets and constructing the abstract syntax tree of HTML entities.

**9.** The method according to claim 1 further comprising storing the hash values on the computer system.

**10.** The method according to claim 1 further comprising storing the hash values of the structural components of the known phishing websites on the computer system as a hash value set table.

**11.** The method according to claim 1 wherein the similarity score is calculated using the Kulczynski 2 coefficient.

**12.** The method according to claim 1 further comprising when the similarity score meets or exceeds a predetermined threshold, adding the first hash value set to the hash values of structural components of known phishing websites.

**13.** The method according to claim 1 wherein the structural components are HTML tags.

**14.** The method according to claim 1 further comprising the determining the provenance of the phishing website.

**15.** The method according to claim 14 wherein determining the provenance of the phishing website includes comparing the hash value set of the phishing website to hash value sets of known phishing websites and calculating a similarity score for each of the known phishing websites.

**16.** The method according to claim 15 further comprising identifying the highest similarity score and clustering the phishing website with the known phishing website from which the highest similarity score was calculated.

## Patentansprüche

**1.** Verfahren zum Identifizieren einer Phishing-Website, mit den Schritten:

a. Bereitstellen eines Computersystems mit einem Betriebssystem, einem Datenbanksystem und einem Kommunikationssystem zum Steuern von Kommunikation über das Internet,
b. Übertragen einer Kommunikation, die eine Vielzahl von verdächtigen Phishing-URLs enthält, an das Computersystem,
c. Aufnahme von Websiteinhaltsdateien für jede verdächtige Phishing-URL aus der Vielzahl von Phishing-URLs, wobei die Websiteinhaltsdateien strukturelle Komponenten umfassen,
d. Vorverarbeiten der Websiteinhaltsdateien, wodurch normalisierte Websiteinhaltsdateisätze für jede aus der Vielzahl von verdächtigen Phishing-URLs erzeugt werden,
e. Erzeugen eines abstrakten Syntaxbaums für jeden der normalisierten Websiteinhaltsdateisätze
f. Berechnen eines Hashwerts für jede strukturelle Komponente jedes der normalisierten Websiteinhaltsdateisätze und Konstruieren eines Hashwertsatzes für jeden normalisierten Websiteinhaltsdateisatz daraus
g. Auswählen eines ersten Hashwerts aus einem ersten Hashwertsatz und Vergleichen des ersten Hashwerts mit Hashwerten struktureller Komponenten bekannter Phishing-Websites, um einen übereinstimmenden Hashwert zu finden,
h. wenn ein übereinstimmender Hashwert geortet ist, Vergleichen des ersten Hashwertsatzes mit einem Hashwertsatz des übereinstimmenden Hashwertsatzes und Erzeugen eines Ähnlichkeitspunktwerts, und
i. wenn der Ähnlichkeitspunktwert einen vorab festgelegten Schwellenwert erreicht oder übersteigt, Bezeichnen einer verdächtigten URL, von der der erste Hashwert erhalten wurde, als einer Phishing-Website.

**2.** Verfahren nach Anspruch 1, wobei die Kommunikation von einer Anti-Spam-Firma, einer Anti-Phishing-Firma, einer Websiteabschaltfirma, einem auf einem Computersystem eines Verbrauchers laufenden autonomen Programm übertragen wird, das zum automatischen Abfangen von verdächtigen Phishing-Site-Überragungen und Senden der verdächtigen Phishing-Site-Überragungen an das Computersystem dient.

**3.** Verfahren nach Anspruch 1, wobei die Vielzahl von verdächtigen Phishing-URLs durch ein erstes Syntaxanalyseprogramms aus der Kommunikation extrahiert wird, wenn die Vielzahl von verdächtigen Phishing-URLs in einem Hauptteil einer Email übertragen wird.

**4.** Verfahren nach Anspruch 1, weiter mit dem Entfernen aller verdächtiger Phishing-URLS, die bekannte gutartige URLs, bekannte Phishing-URLs oder URLs sind, die Duplikate anderer verdächtiger Phishing-URLs in der Vielzahl verdächtiger Phishing-URLs sind, vor dem Schritt c.

**5.** Verfahren nach Anspruch 1, weiter mit dem Schritt des Speicherns der Websiteinhaltsdateien auf dem Computersystem.

**6.** Verfahren nach Anspruch 1, wobei die Vorverarbeitung einen oder mehrere aus den Schritten Entfernen von Leerraum aus den Websiteinhaltsdateien, Unempfindlichkeit gegenüber Groß- und Kleinschreibung in den Websiteinhaltsdateien oder Entfernen von dynamischen Inhalten aus den Websiteinhaltsdateien umfasst.

**7.** Verfahren nach Anspruch 1, wobei die Websiteinhaltsdateien aus Indexseiten der erhaltenen Websiteinhaltsdateien erhalten werden.

**8.** Verfahren nach Anspruch 1, wobei das Erzeugen des abstrakten Syntaxbaums die Syntaxanalyse von HTML-Tags innerhalb der Sätze von normalisierten Websiteinhaltsdateien und das Aufbauen des abstrakten Syntaxbaums von HTML-Einheiten umfasst.

**9.** Verfahren nach Anspruch 1, weiter mit dem Speichern der Hash-Werte auf dem Computersystem.

**10.** Verfahren nach Anspruch 1, weiter mit dem Speichern der Hash-Werte der strukturellen Komponenten der bekannten Phishing-Websites auf dem Computersystem in der Form einer Hashwertsatztabelle.

**11.** Verfahren nach Anspruch 1, wobei der Ähnlichkeitswert unter Verwendung des Kulczynski-2-Koeffizienten berechnet wird.

**12.** Verfahren nach Anspruch 1, weiter mit dem Addieren des ersten Hashwertsatzes zu den Hashwerten von strukturellen Komponenten bekannter Phishing-Websites, wenn der Ähnlichkeitswert einen vorab festgelegten Schwellenwert erreicht oder übersteigt.

**13.** Verfahren nach Anspruch 1, wobei die strukturellen Komponenten HTML-Tags sind.

**14.** Verfahren nach Anspruch 1, weiter mit dem Bestimmen der Herkunft der Phishing-Website

**15.** Verfahren nach Anspruch 14, wobei das Bestimmen der Herkunft der Phishing-Website einen Vergleich des Hashwerts der Phishing-Website mit Hashwertsätzen bekannter Phishing-Websites und Berechnen eines Ähnlichkeitswerts für jede der bekannten Phishing-Websites umfasst.

**16.** Verfahren nach Anspruch 15, weiter mit den Schritten der Identifizierung des höchsten Ähnlichkeitswerts und des Clusterns der Phishing-Website mit der bekannten Phishing-Website, bei der der höchste Ähnlichkeitswert berechnet wurde.

## Revendications

**1.** Procédé d'identification d'un site Internet de hameçonnage comprenant :

a. la fourniture d'un système informatique ayant un système d'exploitation, un système de bases de données et un système de communication pour contrôler les communications par l'Internet,
b. la transmission d'une communication contenant une pluralité d'URL de hameçonnage suspectées vers le système informatique,
c. la récupération des fichiers de contenus du site Internet pour chaque URL de hameçonnage suspectée de la pluralité d'URL de hameçonnage, les fichiers de contenus du site Internet incluant des composants structuraux,
d. le prétraitement des fichiers de contenus du site Internet, produisant de ce fait des ensembles de fichiers de contenus du site Internet normalisés pour chacune de la pluralité d'URL de hameçonnage suspectées,
e. la création d'un arbre syntaxique abstrait pour chacun des ensembles de fichiers de contenus du site Internet, normalisés,
f. le calcul d'une valeur de hachage pour chaque composant structurel de chacun des ensembles de fichiers de contenus du site Internet, normalisés et la construction d'un ensemble de valeurs de hachage, en résultant, pour chaque ensemble de fichiers de contenus du site Internet normalisés,
g. la sélection d'une première valeur de hachage à partir d'un premier ensemble de valeurs de hachage, et la comparaison de la première valeur de hachage à des valeurs de hachage de composants structuraux de sites Internet de hameçonnage connus pour localiser une valeur de hachage correspondante,
h. si une valeur de hachage correspondante est localisée, la comparaison du premier ensemble de valeurs de hachage à un ensemble de valeurs de hachage de la valeur de hachage correspondante, et la création d'un score de similitude, et
i. si la valeur de similitude correspond à un seuil prédéterminé ou le dépasse, la désignation d'une URL suspectée, à partir de laquelle la première valeur de hachage a été dérivée comme site Internet de hameçonnage.

**2.** Procédé selon la revendication 1, dans lequel la communication est transmise par une société anti-spam, une société anti-hameçonnage, une société de prévention, l'exécution d'un programme autonome sur le système informatique d'un consommateur, configuré pour capturer automatiquement des communications du site de hameçonnage suspecté, et envoyer les communications du site de hameçonnage suspecté au système informatique.

**3.** Procédé selon la revendication 1, dans lequel, lorsque la pluralité d'URL de hameçonnage suspectées est transmise dans le corps d'un courriel, la pluralité d'URL de hameçonnage suspectées est extraite de la communication, en utilisant un premier programme d'analyse.

**4.** Procédé selon la revendication 1, comprenant, en outre, avant l'étape c, le retrait de la pluralité d'URL de hameçonnage suspectées, toutes les URL de hameçonnage suspectées, qui sont des URL bénignes connues, URL de hameçonnage connues, des URL de hameçonnage ou doubles d'une autre URL de hameçonnage suspectées, dans la pluralité d'URL de hameçonnage suspectées.

**5.** Procédé selon la revendication 1, comprenant, en outre, le stockage des fichiers de contenus du site Internet sur le système informatique.

**6.** Procédé selon la revendication 1, dans lequel le prétraitement inclut un ou plusieurs du retrait de l'espace blanc des fichiers de contenus du site Internet, de l'insensibilité à la casse des fichiers de contenus du site Internet ou du retrait du contenu dynamique des fichiers de contenus du site Internet.

**7.** Procédé selon la revendication 1, dans lequel les fichiers de contenus du site Internet dérivent de pages d'index des fichiers de contenus du site Internet récupérés.

**8.** Procédé selon la revendication 1, dans lequel la création de l'arbre syntaxique abstrait inclut l'analyse de balises HTML dans les ensembles de fichiers de contenus du site Internet normalisés et la construction de l'arbre syntaxique abstrait d'entités HTML.

**9.** Procédé selon la revendication 1, comprenant, en outre, le stockage des valeurs de hachage sur le système informatique.

**10.** Procédé selon la revendication 1, comprenant, en outre, le stockage des valeurs de hachage des composants structuraux des sites Internet de hameçonnage connus sur le système informatique, comme tableau d'ensembles de valeurs de hachage.

**11.** Procédé selon la revendication 1, dans lequel la valeur de similarité est calculée en utilisant le coefficient de Kulczynski 2.

**12.** Procédé selon la revendication 1, comprenant, en outre, lorsque le score de similitude correspond à un seuil prédéterminé ou le dépasse, l'addition du premier ensemble de valeurs de hachage aux valeurs de hachage de composants structuraux de sites Internet de hameçonnage connus.

**13.** Procédé selon la revendication 1, dans lequel les composants structuraux sont des balises HTML.

**14.** Procédé selon la revendication 1, comprenant, en outre, la détermination de la provenance du site Internet de hameçonnage.

**15.** Procédé selon la revendication 14, dans lequel la détermination de la provenance du site Internet de hameçonnage inclut la comparaison de l'ensemble de valeurs de hachage du site Internet de hameçonnage aux ensembles de valeurs de hachage de sites Internet de hameçonnage connus, et le calcul d'un score de similitude pour chacun des sites Internet de hameçonnage connus.

**16.** Procédé selon la revendication 15, comprenant, en outre, l'identification du score de similitude le plus élevé et le regroupement du site Internet de hameçonnage avec le site Internet de hameçonnage connu, à partir duquel le score de similitude le plus élevé a été calculée.

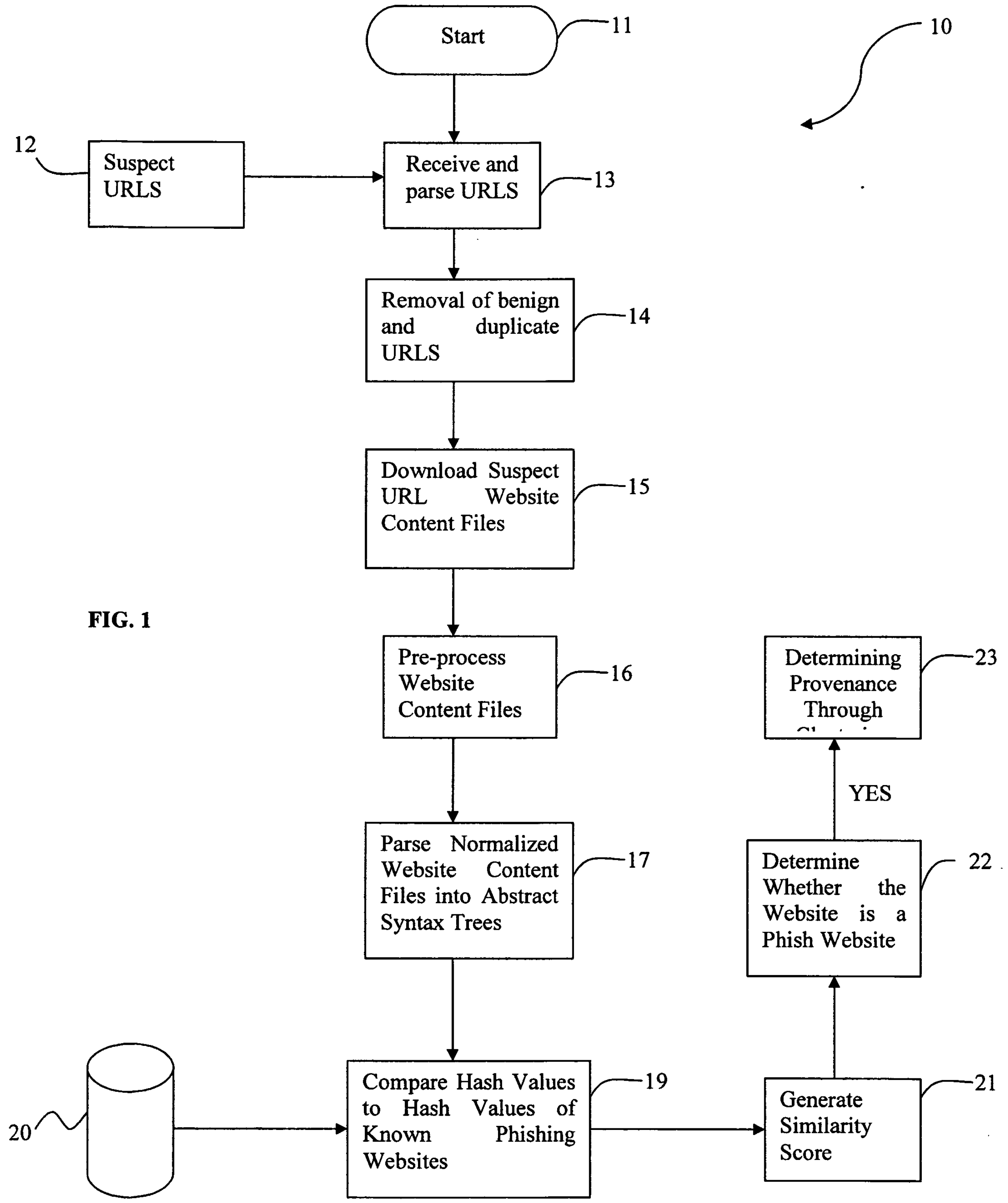

Start
11
10
12
Suspect URLS
Receive and parse URLS
13
Removal of benign and duplicate URLS
14
Download Suspect URL Website Content Files
15
Pre-process Website Content Files
16
Determining Provenance Through
23
YES
Parse Normalized Website Content Files into Abstract Syntax Trees
17
Determine Whether the Website is a Phish Website
22
20
Compare Hash Values to Hash Values of Known Phishing Websites
19
Generate Similarity Score
21


FIG. 1

**FIG. 2**

Snippet 1:

```
<title>Santander – Mais seguranca e particidade no seu dia-a-dia</title>
<meta http-equiv="Content-Type" content+"text/html; charset=iso-8859-1">
<script language="JavaScript" type="text/JavaScript">
<!—
function MM_reloadPage (init) {  //reloads the window if Nav4 resized
  if (init==true) with (navigator) {if
(( appName=="Netscape")&&(parseInt (appVersion)==4)) {
  document.MM_pgW=innerWidth; document.MM_pgH=interHeight;
onresize=MM_reloadPage; }}
  else if (innerWidth!=document.MM_pgW || innerHeight!=document.MM_pgH)
location.reload();
}
MM_reloadPage (true);
//-->
</script>
```

Snippet 2:

```
<title>Bradesco – Mais seguranca e particidade no seu dia-a-dia,/title>
<meta http-equiv="Content-Type" content="text/html; charset=iso-8859-1">
<script language="JavaScript" type="text/JavaScript">
<!--
function MM_reloadPage (init)  {  //reloads the window if Nav4 resized
  if (init==true) with (navigator) {if
((appName=="Netscape")&&(parseInt)appVersion)==4)) {
  document.MM-pgW=innerWidth; document.mM-pgH=innerHeight;
onresize=MM_reloadPage; }}
  else if (innerWidth!=document.mm_pgW || interHeight!=document.MM_pgH)
location.reload();
}
MM_reloadPage(true);
//-->
</script>
```

Snippet 1:

<td class="field-form"><spam class="hidden-left">Zipcode first 5 digits </span><input autocomplete="off" class="align-font-width" name="zipcode5" value="" maxlength=5" six=5" id="previous_zipcode5" **onKeyPress**="return csv_isNumeric (event); " type="text"></td>

Snippet 2:

<td class="field-form"><spam class="hidden-left">Zipcode first 5 digits </span><input autocomplete="off" class="align-font-width" name="zipcode5" value="" maxlength=5" six=5" id="previous_zipcode5" onkeypress="return csv_isNumeric (event); " type="text"></td>

**FIG. 3**

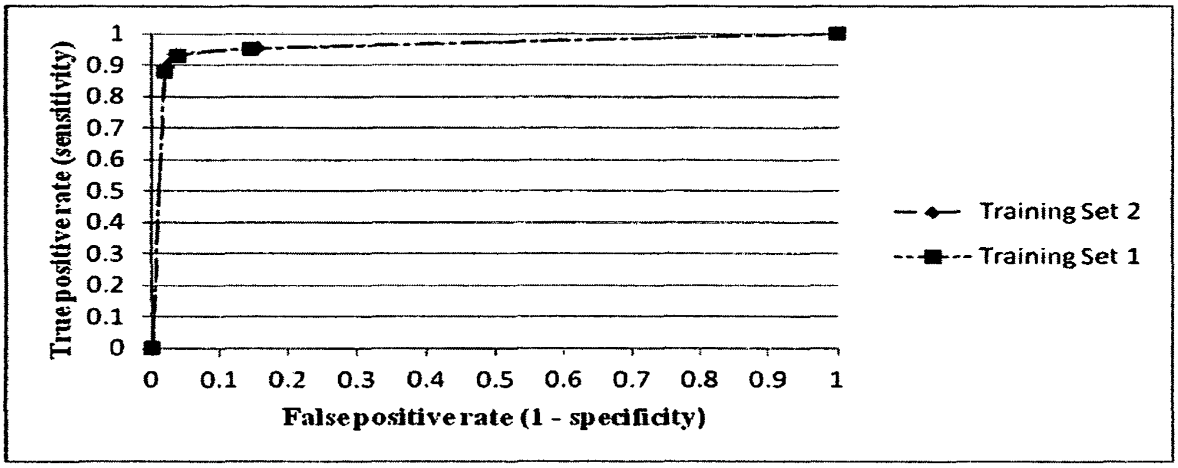


**FIG. 4**

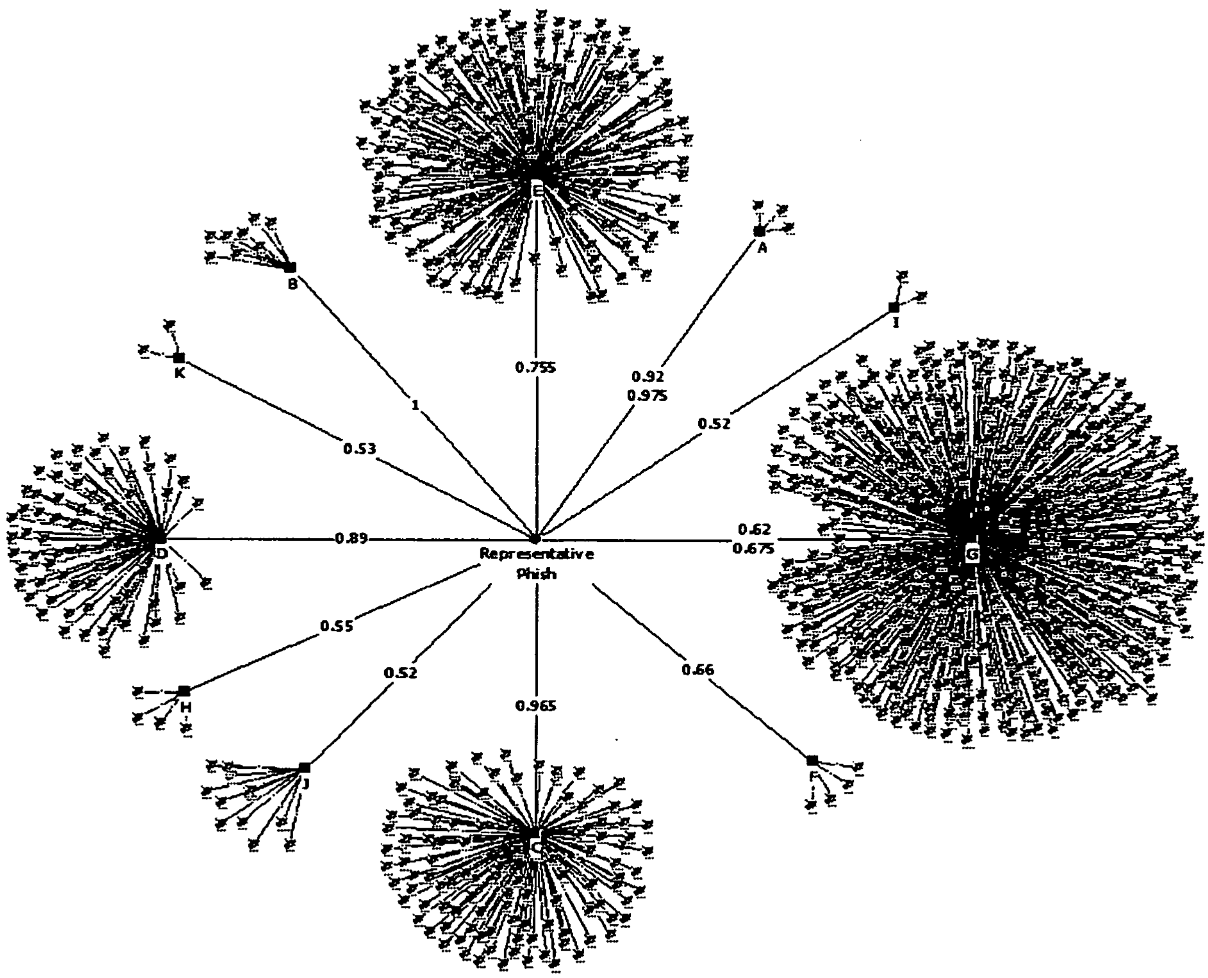
Representative Phish
0.755
0.92
0.975
0.52
0.62
0.675
0.66
0.965
0.52
0.55
0.89
0.53
1
A
B
D
E
G
H
I
J
K

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2007096659 A